# EUROPÄISCHE PATENTSCHRIFT

(11) **EP 3 286 755 B1**
(45) Veröffentlichungstag und Bekanntmachung des Hinweises auf die Patenterteilung: **06.11.2019**
(21) Anmeldenummer: 16709755.9
(22) Anmeldetag: 10.03.2016
(51) Int. Cl.: G10K 11/22, G10K 9/12, G01H 3/00, G01H 11/08, G01S 15/93, G01S 7/521

(54) **VORRICHTUNG ZUM AUSSENDEN AKUSTISCHER SIGNALE IN EINE PRIMÄRRICHTUNG UND/ODER EMPFANGEN AKUSTISCHER SIGNALE AUS DER PRIMÄRRICHTUNG**
DEVICE FOR TRANSMITTING ACOUSTIC SIGNALS IN A PRIMARY DIRECTION AND/OR RECEIVING ACOUSTIC SIGNALS FROM THE PRIMARY DIRECTION
DISPOSITIF PERMETTANT D'ÉMETTRE DES SIGNAUX ACOUSTIQUES DANS UNE DIRECTION PRINCIPALE ET/OU DE RECEVOIR DES SIGNAUX ACOUSTIQUES PROVENANT D'UNE DIRECTION PRINCIPALE

(30) Priorität: 22.04.2015 DE 102015207309
(43) Veröffentlichungstag der Anmeldung: 28.02.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/055108
(87) Internationale Veröffentlichungsnummer: WO 2016/169697

(56) Entgegenhaltungen:
- EP-A2- 0 874 351
- US-A- 2 753 543
- US-A- 3 325 779
- US-A- 3 970 879
- US-A1- 2008 089 177

## Beschreibung

### Stand der Technik

Die vorliegende Erfindung betrifft eine Vorrichtung zum Aussenden akustischer Signale in eine Primärrichtung und/oder Empfangen akustischer Signale aus der Primärrichtung, insbesondere zum Erfassen einer Fahrzeugumgebung.

Aktuelle Aufbauten von Ultraschallsensoren sind komplex. In einem solchen Ultraschallsensor sind zumeist zwei Leitungen jeweils einerseits an einem Kontakt eines Kontaktträgers und andererseits an einem entsprechenden Kontakt einer piezokeramischen Scheibe, dem sogenannten elektroakustischen Wandler, elektrisch kontaktiert. Dabei sind die Leitungen mit dem elektroakustischen Wandler verschweißt, was bevorzugt mittels eines Vorgangs zum thermokompressiven Schweißen erfolgt. Der elektroakustische Wandler ist an den zu einer Membran verjüngten Boden eines topfförmigen Gebildes aus Aluminium geklebt. Der Kontaktträger ist zur Kontaktierung in einem Gehäuse des Ultraschallsensors platziert. An dem Kontaktträger ist typischerweise eine Leiterplatte einer Ansteuerelektronik angeschlossen und bei leiterplattenlosen Aufbauten typischerweise ein Stecker oder ein Kabel angeschlossen.

In das topfförmige Gebilde des Ultraschallwandlers, den sogenannten Wandlertopf, ist oftmals ein Schaum eingebracht, um einen Nachhall und ein Nachschwingen der Membran zu verkürzen und um die Schallabstrahlung entgegen der Primärrichtung mittels einer Dämpfung des Schaums abzubauen.

Die optional entgegen der Primärrichtung des Wandlers verbaute Leiterplatte wird dort beim Stand der Technik gegenüber dem Wandlertopf beabstandet positioniert so dass eventuell dort entgegen der Primärrichtung abgestrahlter Schall durch den verbliebenen Spalt entweichen bzw. dort einfallender Schall beim Empfangen eintreten kann. Auch die beim Stand der Technik optional verwendeten relativ schallharten Vergussmaterialien zum Abdichten der Sensorgehäuse haben äquivalent einen großen Abstand zum Wandler und bilden dadurch entsprechend große Spalte. Darüber hinaus weist dieser Verguss in Wandlernähe infolge des Aushärtens eine unregelmäßige Oberfläche auf. Somit ergeben sich auch dadurch keine reflektierenden Eigenschaften.

Bei einer Umfelderfassung mittels eines Ultraschallsensors kommt es oftmals, insbesondere bei Messungen in einem Nahbereich, zu Problemen. Eine mögliche Ursache ist, dass ein vom elektroakustischen Wandler erzeugter Schall nicht nur nach vorn, also in eine gewünschte Richtung abgestrahlt wird, sondern bspw. über eine Wand, welche die Membran trägt, d. h. die Wand des Wandlertopfes, in ein seitlich neben dem Ultraschallsensor befindliches Anbauteil, wie z. B. einen Stoßfänger, abgestrahlt wird. Mittels eines zusätzlichen Entkopplungsrings wird oftmals versucht, diese Schallfehlausbreitung zu reduzieren.

Es ist bekannt, dass viele Wandlerprinzipien umkehrbar sind, d. h., dass die für das Abstrahlen gemachten Aussagen zumeist vorzeicheninversiv auch für ein Einstrahlen gültig sind. Selbst für eine nicht umkehrbare Sensorik, wie z. B. resistive Sensoren, geltend äquivalente Regeln der Schallausbreitung.

Aus dem Dokument US 3 325 779 A ist außerdem ein Ultraschallwandler zur Nutzung im Wasser beschrieben, dessen Oszillator ein vorwärtiges und ein rückwärtiges Signal erzeugt. Das rückwärtige Signal wird hierbei von dem Gehäuse des Ultraschallwandlers so reflektiert, dass es daraufhin ebenfalls in Richtung des vorwärtigen Signals ausgesendet wird.

Das Dokument US 3 970 879 A beschreibt eine akustische Warnvorrichtung mit einem Piezoelement, wobei erzeugte Schallsignale an einer rückwärtigen Platte innerhalb des Gehäuses der Warnvorrichtung reflektiert werden.

Das Dokument US 2 753 543 A beschreibt einen magnetostriktiven Wandler. Der Wandler ist in ein Material eingegossen, welches eine ähnliche Impedanz wie das Umgebungsmedium aufweist. Hierbei werden vorwärtige und rückwärtige Signale erzeugt, wobei die rückwärtigen Signale auf einen Reflektor gelangen und wieder nach vorne abgestrahlt werden.

Das Dokument US 2008/089177 A1 beschreibt einen Ultraschallwandler, der an einem Stoßfänger angeordnet ist. Um ungewollte Vibrationen, die sich vom Sensor her über den Stoßfänger ausbreiten, abzudämpfen, weist der Stoßfänger Bereiche mit unterschiedlichen Dicken auf.

Das Dokument EP 0 874 351 A2 beschreibt einen Ultraschallwandler zur Distanz- und/oder Positionsbestimmung eines Objekts.

### Offenbarung der Erfindung

Die erfindungsgemäße Vorrichtung zum Aussenden akustischer Signale in eine Primärrichtung und/oder Empfangen akustischer Signale aus der Primärrichtung, insbesondere zum Erfassen einer Fahrzeugumgebung, ist in Anspruch 1 definiert.

Eine solche erfindungsgemäße Vorrichtung zeichnet sich durch eine besonders hohe Energieeffizienz aus, da die von dem elektroakustischen Wandler ausgesendeten akustischen Signale, welche nicht unmittelbar in die Primärrichtung ausgesendet werden, über das Umlenkelement in diese umgelenkt werden. Dabei erfolgt kaum eine zusätzliche Dämpfung des akustischen Signals. Ungewollte akustische Abstrahlungen auf einer rückwärtigen Seite der Vorrichtung werden vermieden. Somit wird der gegenüber der Primärrichtung seitlich oder nach hinten aus- bzw. eingekoppelte Schall des Sensors minimiert. Der Wirkungsgrad, also das Verhältnis von integral abgegebener Schallleistung zu Sendeleistung, wird maximiert und das akustische Signal wird nicht zu diesem Zweck gedämpft. In äquivalenter Weise zeichnet sich die erfindungsgemäße Vorrichtung bei einem Empfangen akustischer Signale ebenfalls durch einen hohen Wirkungsgrad aus. Darüber hinaus wird durch die Gestaltung der akustischen Pfade die Richtcharakteristik beeinflusst. Der mittels Umlenkelement via eines akustischen Pfades ebenfalls in die Primärrichtung gelenkte rückwärtige Schall des Wandlers superponiert dort mit dem unmittelbar in Primärrichtung ausgestrahlten Schall. Nach den Regeln der Wellenmechanik findet dort eine konstruktive bzw. destruktive Überlagerung statt und abhängig von der Laufzeit und dem Austrittsort des entlang des akustischen Pfades gelenkten Schalls kann die Richtung der maximalen Abstrahlung beim Aussenden in bzw. der maximalen Empfindlichkeit beim Empfangen aus der Primärrichtung beeinflusst werden.

Die Unteransprüche zeigen bevorzugte Weiterbildungen der Erfindung.

Es ist vorteilhaft, wenn der erste akustische Pfad durch das Umlenkelement derart gebildet ist, dass das in die rückwärtige Richtung gesendete akustische Signal, welches dem ersten akustischen Pfad folgt, eine derartige Laufzeitverzögerung gegenüber einem von dem elektroakustischen Wandler direkt in die Primärrichtung ausgesendeten akustischen Signal erfährt, dass eine konstruktive Überlagerung mit dem direkt in die Primärrichtung ausgesendeten akustischen Signal erfolgt, und/oder ein aus der Primärrichtung empfangenes akustisches Signal, welches dem ersten akustischen Pfad folgt, eine derartige Laufzeitverzögerung gegenüber einem von dem elektroakustischen Wandler direkt aus der Primärrichtung empfangenen akustischen Signal erfährt, dass eine konstruktive Überlagerung mit dem direkt aus der Primärrichtung empfangenen akustischen Signal erfolgt. Somit wird ein gegenseitiges Auslöschen von Schallwellen des akustischen Signals aufgrund unterschiedlicher Laufwege vermieden. Die Effizienz der Vorrichtung wird somit gesteigert. Eine konstruktive Überlagerung ist eine Überlagerung zweier wellenförmiger Signale, bei der die Wellenberge beider wellenförmigen Signale aufeinander fallen und somit in ihrer Intensität verstärkt werden.

Gemäß der Erfindung ist es, wenn das Umlenkelement ferner dazu eingerichtet ist, beim Aussenden akustischer Signale das in die rückwärtige Richtung ausgesendete akustische Signal ferner über einen zweiten akustischen Pfad derart in die Primärrichtung umzulenken, dass dieses den elektroakustischen Wandler seitlich passiert, und/oder beim Empfangen akustischer Signale das aus der Primärrichtung ankommende akustische Signal, welches den elektroakustischen Wandler seitlich passiert, derart über den zweiten akustischen Pfad umzulenken, dass dieses aus der rückwärtigen Richtung auf den elektroakustischen Wandler trifft, wobei der erste akustische Pfad und der zweite akustische Pfad eine unterschiedliche Laufzeit für das akustische Signal aufweisen, um eine Richtcharakteristik der Vorrichtung zu beeinflussen. Es wird somit ermöglicht, dass eine Hauptrichtung einer ausgesandten Schallkeule von der senkrechten auf der schallaussendenden oder -empfangenden Fläche des elektroakustischen Wandlers abweicht. Dieser Effekt kann dabei durch konstruktive Maßnahmen beeinflusst und somit gezielt gestaltet werden. Es wird somit ein gezieltes Aussenden und Empfangen akustischer Signale in eine bestimmte Richtung ermöglicht, wobei eine Lage der Vorrichtung nach einem Einbau flexibel gewählt werden kann.

Ferner ist es gemäß der Erfindung, wenn der elektroakustische Wandler mit einem ersten Teilbereich der Membran verbunden ist und der erste akustische Pfad über einen zweiten Teilbereich der Membran führt. Somit wird erreicht, dass alle akustischen Öffnungen der Vorrichtung durch eine gemeinsame Membran verdeckt werden. Dies ermöglicht einen besonders einfachen Aufbau der Vorrichtung.

Ferner ist es vorteilhaft, wenn zwischen dem ersten Teilbereich und dem zweiten Teilbereich der Membran ein Entkopplungsmittel angeordnet ist, welches eine Übertragung von Schwingungen zwischen dem ersten Teilbereich und dem zweiten Teilbereich der Membran zumindest verringert. Da der erste Teilbereich und der zweite Teilbereich unterschiedliche Phasenlagen aufweisen können, ist es vorteilhaft, wenn eine Schwingungsübertragung zwischen dem ersten Teilbereich und dem zweiten Teilbereich vermieden wird. Die Effizienz der Vorrichtung wird auf diese Weise gesteigert.

Bevorzugt ist das Entkopplungsmittel eine Verdickung und/oder akustische Masse der Membran zwischen dem ersten Teilbereich und dem zweiten Teilbereich. Es wird somit eine besonders einfache Herstellung der Vorrichtung ermöglicht, da keine zusätzlichen Komponenten notwendig sind.

Es ist vorteilhaft, wenn das Entkopplungsmittel eine die Membran stützende Trägervorrichtung umfasst, wobei die stützende Trägervorrichtung zumindest einen schallharten Bereich und einen schalldurchlässigen Bereich aufweist. Insbesondere ist der schalldurchlässige Bereich in dem ersten akustischen Pfad und/oder dem zweiten akustischen Pfad angeordnet. Es wird somit ein zusätzlicher Stützpunkt für die Membran geschaffen, wodurch eine Schwingungsübertragung zwischen dem ersten Teilbereich und dem zweiten Teilbereich der Membran weiter minimiert wird. Zudem wird eine unnötige Dämpfung des akustischen Signals vermieden.

Ebenso vorteilhaft ist es, wenn der erste Teilbereich und/oder der zweite Teilbereich der Membran zumindest eine Sicke in deren Randbereichen aufweisen. Dadurch wird eine Dämpfung des akustischen Signals durch die Membran verringert und somit der Wirkungsgrad der Vorrichtung gesteigert. Es wird dabei eine effektive Größe einer schwingenden Fläche der Membran erhöht.

Auch ist es vorteilhaft, wenn die Membran von einem Membranträger gehalten wird, wobei eine Dicke des Membranträgers zumindest ein Fünffaches einer Dicke der Membran beträgt. Dem Membranträger kommt dabei die Aufgabe zu, das Schwingungsverhalten der Membran in Primärrichtung zu befördern und Schwingungen jenseits der Primärrichtung durch geeignete Mittel, wie konstruktive Maßnahmen, zu vermeiden. Dies wird beispielsweise erreicht, indem die Dicke des Membranträgers zumindest ein Fünffaches einer Dicke der Membran beträgt. Auf diese Weise wird sichergestellt, dass lediglich die Membran und nicht der Membranträger durch das akustische Signal in eine Schwingung versetzt wird. Es wird somit ein Aussenden eines akustischen Signals oder ein Empfangen eines akustischen Signals in einer ungewollten Richtung vermieden. Dies führt zu einer verbesserten Abstrahlcharakteristik der Vorrichtung.

Auch ist es vorteilhaft, wenn die Membran von einem Membranträger gehalten wird, wobei der Membranträger eine Oberfläche aufweist, die von Streben oder Sicken durchlaufen wird, da diese konstruktive Maßnahme eine akustische Anregung des Membranträgers zumindest verringert. Somit wird auf materialsparende Weise eine ungewollte Abstrahlung der Vorrichtung vermieden und deren Abstrahlcharakteristik verbessert.

Ferner ist es vorteilhaft, wenn der erste akustische Pfad über eine erste Membran und der zweite akustische Pfad über eine zweite Membran führt. Dabei ist es insbesondere vorteilhaft, wenn sich die Gestalten der Membranen voneinander unterscheiden. Neben der Form, relativen Lage und eingenommenen Fläche unterscheidet sich die Membran, die primär durch einen Elektro-Akustik-Wandler angeregt wird, von denen, die eine akustische Öffnung des mindestens einen Umlenkelements abdecken. Erstere werden z.B. in ihrer Dickenstruktur stark von der Aufgabe geprägt, dass sie zur effektiven Wandlung von elektrischer in mechanischer Bewegung bzw. umgekehrt beitragen müssen während letztere vorrangig nur die Aufgabe haben, das Umlenkelement vor Verschmutzen durch stoffliche Einträge, wie Staub, Matsch, Wasser usw. zu schützen. Bei geeigneter Gestaltung und Positionierung der Vorrichtung und Ausrichtung des Umlenkelements, z.B. Ausrichtung nach unten, so dass Schmutz stets heraus fällt, evtl. Durchblasen durch kleine Öffnung mit natürlichem Fahrtwind zum ständigen Reinigen, Einbeziehen großflächiger ohnehin vorhandener Karosseriebauteile als Reflektor, unterscheidet sich deren Abdeckung /Membran deutlich von der der primär den Schall abstrahlenden Membran. So kann die Abdeckung des Umlenkelements nur eine Gitterstruktur zum Schutz vor groben Verunreinigungen sein bzw. eventuell sogar ganz entfallen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
Figur 1 eine erfindungsgemäße Vorrichtung zum Aussenden akustischer Signale in eine Primärrichtung und/oder Empfangen akustischer Signale aus der Primärrichtung in einer ersten Ausführungsform,
Figur 2 eine erfindungsgemäße Vorrichtung zum Aussenden akustischer Signale in eine Primärrichtung und/oder Empfangen akustischer Signale aus der Primärrichtung in einer zweiten Ausführungsform,
Figur 3 eine nicht erfindungsgemäße Vorrichtung zum Aussenden akustischer Signale in eine Primärrichtung und/oder Empfangen akustischer Signale aus der Primärrichtung,
Figur 4 eine erfindungsgemäße Vorrichtung zum Aussenden akustischer Signale in eine Primärrichtung und/oder Empfangen akustischer Signale aus der Primärrichtung in einer weiteren Ausführungsform,
Figur 5 eine Draufsicht auf einen Membranträger einer Vorrichtung gemäß der ersten und zweiten Ausführungsform der Erfindung.

### Ausführungsformen der Erfindung

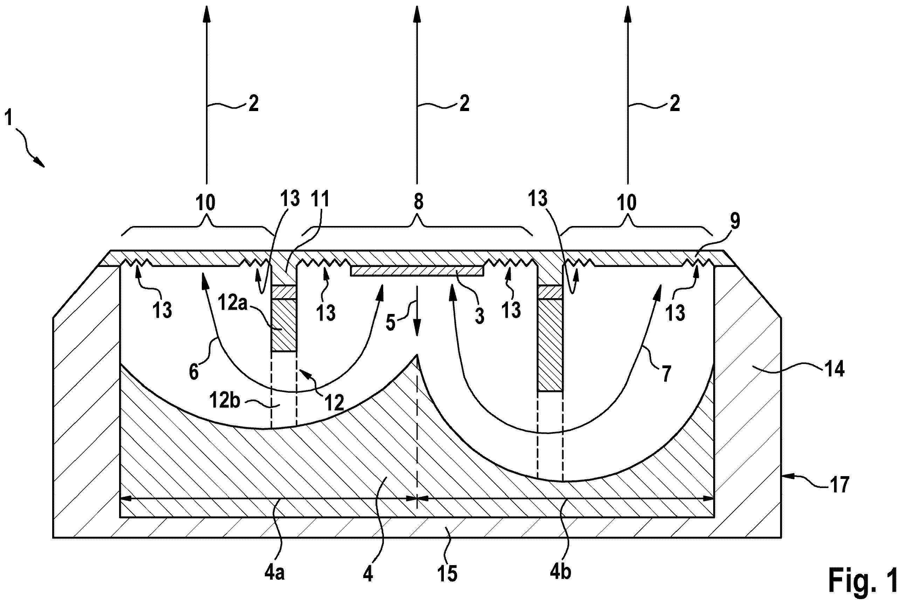

Figur 1 zeigt eine Vorrichtung 1 zum Aussenden akustischer Signale in eine Primärrichtung 2 und Empfangen akustischer Signale aus der Primärrichtung 2. Die Vorrichtung 1 ist ein Ultraschallsensor. Die Vorrichtung 1 ist in Figur 1 in einem Querschnitt gezeigt. Ein Gehäuse 17 der Vorrichtung 1 weist in dieser ersten Ausführungsform die Form eines Topfes auf, der in Figur 1 in seinem Querschnitt gezeigt ist. Das Gehäuse hat einen Boden 15 und seitliche Wände, die in dieser ersten Ausführungsform einen Membranträger 14 bilden. Auf einer dem Boden 15 des Gehäuses gegenüberliegenden Öffnung des Gehäuses ist eine Membran 9 angeordnet, welche die in Figur 1 oben gelegene Öffnung des Topfes bzw. des Gehäuses 17 überspannt. Dazu ist die Membran 9 an ihrem äußeren Umfang mit dem Membranträger 14 verschweißt. In einem Zentrum der Membran 9 ist ein elektroakustischer Wandler 3 angeordnet. Der elektroakustische Wandler 3 ist an der einer Primärrichtung 2 gegenüberliegend gelegenen bzw. abgewandten Seite der Membran 9 angeordnet. Der elektroakustische Wandler 3 hat beispielsweise die Form einer runden Scheibe. Eine der ebenen Oberflächen des elektroakustischen Wandlers 3 ist mit der Membran 9 verklebt.

Die Primärrichtung 2 ist eine Richtung, die senkrecht auf einer Oberfläche der Membran steht und in diesem Beispiel von dem Boden 15 des Gehäuses 17 weg gerichtet ist. Eine rückwärtige Richtung 5 ist eine der Primärrichtung 2 entgegengesetzte Richtung, die senkrecht auf der Membran 9 steht und in diesem Beispiel in Richtung des Bodens 15 gerichtet ist.

Von der Membran 9 aus gesehen in der Primärrichtung 2 entgegengesetzten, das heißt, rückwärtigen Richtung 5, ist ein Umlenkelement 4 angeordnet, das sich hier innerhalb des Gehäuses 17 befindet. Das Umlenkelement 4 bedeckt zusammen mit dem Membranträger 14 den der Primärrichtung 2 entgegengesetzten Bereich der Membran 9 bzw. schließt ihn akustisch ab. Das Umlenkelement 4 weist auf der in Figur 1 links gelegenen Seite einen ersten Umlenkbereich 4a auf, der sich von dem Membranträger 14 bis zu einem Zentrum der Vorrichtung 1 erstreckt. Das Umlenkelement 4 weist einen in der Figur 1 rechts gelegenen zweiten Umlenkbereich 4b auf, der sich von dem Membranträger 14 zu dem Zentrum der Vorrichtung 1 erstreckt. Der erste Umlenkbereich 4a und der zweite Umlenkbereich 4b liegen also entlang dem Querschnitt der Vorrichtung 1 hintereinander und erstrecken sich in diesem Fall zusammen mit dem Membranträger 14 über einen gesamten inneren Querschnitt des Gehäuses 17.

Das Umlenkelement 4 ist aus einem Material geformt, welches für einen Frequenzbereich des akustischen Signals schalltechnisch dicht ist. Das bedeutet unter anderem, dass eventuell vorhandene Öffnungen in dem Umlenkelement 4 erheblich kleiner sind, als eine Wellenlänge der Schallwellen des akustischen Signals in Luft und dass ihre Summe weniger als 20% des Ausbreitungsweges ausmachen. Somit sind nur sehr kleine oder keine Öffnungen in dem Umlenkelement 4 vorhanden, durch welche zwar eventuell vorhandene Luftdruckschwankungen ausgeglichen werden aber höchstens ein vernachlässigbarer Anteil des akustischen Signals von der Membran 9 durch den Boden 15 des Gehäuses gelangen könnte. So wird dabei vorrangig eine Reflexion ermöglicht. Es ist zudem vorteilhaft, wenn eventuelle Öffnungen in dem Umlenkelement 4, wie beispielsweise Öffnungen zum Einbringen eines Dämm-Materials, verschlossen werden.

In dem ersten Umlenkbereich 4a weist das Umlenkelement 4 auf seiner der Membran 9 zugewandten Seite eine bogenförmige Senke auf, die sich über eine gesamte Breite des ersten Umlenkbereichs 4a erstreckt. Der zweite Umlenkbereich 4b des Umlenkelements 4 weist auf seiner der Membran 9 zugewandten Seite eine bogenförmige Senke auf, die sich über die gesamte Breite des zweiten Umlenkbereichs 4b erstreckt. Die Senke des ersten Umlenkbereichs 4a und die Senke des zweiten Umlenkbereichs 4b weisen eine unterschiedliche Tiefe auf.

Die Membran 9 ist in einen ersten Teilbereich 8 und einen zweiten Teilbereich 10 unterteilt. Der erste Teilbereich 8 ist in diesem Beispiel kreisförmig bzw. eine Kreisscheibe und ein Zentrum des ersten Bereichs 8 liegt in dem Zentrum der Membran 9. Aber auch alternative Konturen des Membranteils 8 sind möglich, wie z.B. eine elliptische bzw. eine rechteckige Form. Ein Übergang zwischen dem ersten Umlenkbereich 4a und dem zweiten Umlenkbereich 4b liegt entlang der rückwärtigen Richtung 5 unter dem Zentrum der Membran 9. In einer ersten bevorzugten Ausprägung wird der erste Teilbereich 8 der Membran 9 an zwei einander gegenüber liegenden Seiten von jeweils einem Teilbereich 10 eingesäumt, wobei die Teilflächen 10 jeweils etwa so groß wie die Teilfläche 8 sind. Die übrigen Bereiche der Membran 9 liegen jeweils auf entsprechenden Bereichen des Membranträgers 14 bzw. einer nachfolgend näher beschriebenen Trägervorrichtung 12 auf und/oder weisen z.B. durch entsprechende konstruktive Maßnahmen, wie Materialverdickung, eine vernachlässigbare Schwingeigenschaft auf. Alternativ wird der erste Teilbereich 8 der Membran 9 von dem zweiten Teilbereich 10 der Membran 9 ringförmig umschlossen. Diese Ausprägung wird den nachfolgenden Ausführungen zugrunde gelegt. Daher liegt der zweite Teilbereich 10 in dem in Figur 1 gezeigten Querschnitt sowohl auf einer linken Seite des ersten Teilbereichs 8 der Membran 9 als auch auf einer rechten Seite des ersten Teilbereichs 8 der Membran 9.

Zwischen dem ersten Teilbereich 8 der Membran 9 und dem zweiten Teilbereich 10 der Membran 9 weist die Membran 9 eine Verdickung auf, durch welche ein Entkopplungsmittel 11 gebildet wird. Das Entkopplungsmittel 11 umfasst in dieser Ausführungsform ferner eine Trägervorrichtung 12, welche die Verdickung der Membran 9 gegenüber dem Umlenkelement 4 abstützt. In alternativen Ausführungsformen wird das Entkopplungsmittel 11 von einem Stück Leiterplatte gebildet, die ebenfalls als Trägervorrichtung 12 dienen kann, um ein Aufstützen der Membran 9 an einem Schwingungsknoten zu ermöglichen.

Ein äußerer Umfang des ersten Teilbereichs 8 der Membran 9 wird hier bevorzugt von einer Sicke 13 umlaufen. Die Sicke 13 ist eine besonders nachgiebige Dünnstelle der Membran 9. Der zweite Teilbereich 10 der Membran 9 wird sowohl an seinem äußeren Umfang als auch an seinem inneren Umfang von jeweils einer Sicke 13 umlaufen. Die Sicke 13 des zweiten Teilbereichs 10 stellt ebenfalls Dünnstellen der Membran 9 dar.

Schwingende Bereiche der Membran 9, hier der erste Teilbereich 8 und der zweite Teilbereich 10, werden somit durch eine Formgebung der Membran 9 und insbesondere durch Dünnstellen und steife Stellen der Membran 9 beeinflusst.

Wird das Umlenkelement 4 in einer nicht gezeigten Draufsicht betrachtet, so zeigt sich, dass die bogenförmige Senke in dem ersten Umlenkbereich 4a und die bogenförmige Senke in dem zweiten Umlenkbereich 4b zusammen eine gemeinsame Senke umgeben, welche ein Zentrum des Umlenkelements 4 kreisförmig in Form eines Grabens mit veränderlicher Tiefe umläuft, wobei die veränderliche Tiefe in dem ersten Umlenkbereich 4a minimal ist und in dem zweiten Umlenkbereich 4b maximal ist. Erstreckt sich der Teilbereich 10 nicht vollumfänglich um den Teilbereich 8 der Membran 9, so werden die Umlenkbereiche bevorzugt so gestaltet, dass der vom Teilbereich 8 rückwärtig gerichtete Schall verlustarm auf die Teilbereiche 10 umgelenkt wird.

Die Dickstelle der Membran 9, also das Entkopplungsmittel 11, umläuft den ersten Teilbereich 8 in der hier erörterten Ausführung in Form eines Ringes, wobei der Ring und somit die Dickstelle an jeder Stelle über der umlaufenden Senke des Umlenkelements 4 angeordnet ist. In einer Draufsicht auf die Vorrichtung 1 aus Seiten der Primärrichtung 2, sind die Dickstelle der Membran 9 und die umlaufenden Senke des Umlenkelements 4 konzentrisch. Die Trägervorrichtung 12 erstreckt sich zwischen der Dickstelle der Membran 9 und der umlaufenden Senke der Trägervorrichtung 12. Die Trägervorrichtung 12 ist somit ein ringförmiges Element. Eine aufseiten der Membran 9 gelegene Seite der Trägervorrichtung 12 wird dabei durch einen schallharten Bereich 12a gebildet. Der schallharte Bereich 12a ist dabei ein Bereich, der aus einem Material besteht, welches aufgrund seiner Steifigkeit nicht zu Schwingungen in einem Ultraschallbereich angeregt werden kann. Ein aufseiten des Umlenkelements 4 gelegener Teil der Trägervorrichtung 12 weist Öffnungen zwischen einer inneren Seite der ringförmigen Trägervorrichtung 12 und einer äußeren Seite der ringförmigen Trägervorrichtung 12 auf und bildet einen schalldurchlässige Bereich 12b. Die Öffnungen der Trägervorrichtung 12 sind akustische Durchbrüche, die einen möglichst großen Öffnungsquerschnitt aufweisen. Dabei ist zu beachten, dass der schalldurchlässige Bereich 12b stabil genug ist, um die Trägervorrichtung 12 und insbesondere den schallharten Bereich 12a als eine akustische Sperre an die Membran 9 zu drücken. In alternativen Ausführungsformen wird der schalldurchlässige Bereich 12b aus einem schalldurchlässigen Material gebildet.

Im Folgenden wird die Funktion der Vorrichtung 1 bei einem Aussenden akustischer Signale betrachtet.

Bei einem Aussenden akustischer Signale wird der elektroakustische Wandler 3 und der mit ihm verbundene Teilbereich 8 der Membran 9 in Schwingung versetzt. Die elektrische Ansteuerung des elektroakustischen Wandlers 3 erfolgt über eine entsprechende Elektronik, die bspw. zwischen dem Umlenkelement 4 und dem Boden 15 des Gehäuses angeordnet ist. Das Umlenkelement 4 umfasst dabei zumindest eine Leitungsführung, über welche eine elektrische Verbindung zwischen dem elektroakustischen Wandler 3 und der Elektronik erfolgt. In alternativen Ausführungsformen dient das Umlenkelement 4 gleichzeitig als ein Kontaktträger, über den eine Kontaktierung des elektroakustischen Wandlers 3 erfolgt.

Da der elektroakustische Wandler 3 mit dem ersten Teilbereich 8 der Membran 9 verklebt ist, wird mit dem elektroakustischen Wandler 3 ebenfalls der erste Teilbereich 8 der Membran 9 zu einer Schwingung angeregt. Durch das Schwingen des elektroakustischen Wandlers wird ein akustisches Signal abgegeben. Das akustische Signal wird über den ersten Teilbereich 8 der Membran 9 in Richtung der Primärrichtung 2 ausgesendet. Zudem wird durch das Schwingen des elektroakustischen Wandlers 3 und des ersten Teilbereichs 8 der Membran 9 das akustische Signal ebenfalls in die rückwärtige Richtung 5 ausgesendet.

Da zwischen dem ersten Teilbereich 8 und dem zweiten Teilbereich 10 der Membran 9 das Entkopplungsmittel 11 angeordnet ist, werden die Schwingungen des elektroakustischen Wandlers 3 und des ersten Teilbereichs 8 der Membran 9 nicht an den zweiten Teilbereich 10 der Membran 9 übertragen. Eine Übertragung von Schwingungen zwischen dem ersten Teilbereich 8 und dem zweiten Teilbereich 10 der Membran 9 wird somit verringert. Durch die Sicke 13, die den ersten Teilbereich 8 der Membran 9 umläuft, wird ein Schwingen der Membran in den ersten Teilbereich 8 vereinfacht und somit eine Dämpfung der Schwingung der Membran 9 vermieden.

Bei dem Aussenden des akustischen Signals in die rückwärtige Richtung 5 wird das abgegebene akustische Signal über einen ersten akustischen Pfad 6 derart in die Primärrichtung 2 umgelenkt, dass dieses den elektroakustischen Wandler 3 seitlich passiert. Der erste akustische Pfad 6 wird durch den ersten Umlenkbereich 4a des Umlenkelements 4 gebildet. Die von dem elektroakustischen Wandler 3 abgegebenen Schallwellen und somit das akustische Signal folgen der bogenförmigen Senke in dem ersten Umlenkbereich 4a, wobei die Schallwellen die Trägervorrichtung 12 in deren schalldurchlässigen Bereich 12b passieren. Das akustische Signal wird somit auf den zweiten Teilbereich 10 der Membran 9 gelenkt, der in Figur 1 links des ersten Teilbereichs 8 der Membran 9 dargestellt ist. Durch das akustische Signal wird somit nun der zweite Teilbereich 10 der Membran 9 zu einer entsprechenden Schwingung angeregt und gibt das akustische Signal in die Primärrichtung 2 weiter.

Der erste akustische Pfad 6 verläuft somit von dem elektroakustischen Wandler 3 ausgehend entlang dem ersten Umlenkbereich 4a des Umlenkelements 4 zu dem zweiten Bereich 10 der Membran 9.

Ein Abstand zwischen dem Umlenkelement 4 und dem elektroakustischen Wandler 3 sowie der Membran 9 ist in dieser ersten Ausführungsform derart gewählt, dass das in die rückwärtige Richtung 5 gesendete Signal, welches dem ersten akustischen Pfad 6 folgt, eine derartige Laufzeitverzögerung gegenüber einem von dem elektroakustischen Wandler 3 direkt in die Primärrichtung 2 abgegebenen akustischen Signal erfährt, dass eine konstruktive Überlagerung mit dem direkt in die Primärrichtung 2 ausgesendeten akustischen Signal erfolgt. Der erste akustische Pfad 6 weist somit eine Länge auf, die einem ganzen Vielfachen einer Periodenlänge des akustischen Signals abzüglich einer halben Periodenlänge des akustischen Signals entspricht. Somit wird ein Laufweg des akustischen Signals, also der erste akustische Pfad 6, so gewählt, dass dieser eine Verschiebung einer Phase des in die rückwärtige Richtung 5 abgegeben akustischen Signals gegenüber einer Phase des in die Primärrichtung 2 abgegebenen akustischen Signals bewirkt.

Es ist zu beachten, dass das von dem elektroakustischen Wandler 3 in die rückwärtige Richtung 5 abgegebene akustische Signal in seiner Periode invers und somit um 180°Grad phasenverschoben zu dem in die Primärrichtung 2 abgegebenen akustischen Signal ist.

Bei dem Aussenden des akustischen Signals in die rückwärtige Richtung 5 wird das abgegebene akustische Signal zudem über einen zweiten akustischen Pfad 7 derart in die Primärrichtung 2 umgelenkt, dass dieses den elektroakustischen Wandler 3 seitlich passiert. Der zweite akustische Pfad 7 wird durch den zweiten Umlenkbereich 4b des Umlenkelements 4 gebildet. Die von dem elektroakustischen Wandler 3 abgegebenen Schallwellen und somit das akustische Signal folgen der bogenförmigen Senke in dem zweiten Umlenkbereich 4b, wobei die Schallwellen die Trägervorrichtung 12 in deren schalldurchlässigen Bereich 12b passieren. Das akustische Signal wird somit auf den zweiten Teilbereich 10 der Membran 9 gelenkt, der in Figur 1 rechts des ersten Teilbereichs 8 der Membran 9 dargestellt ist. Durch das akustische Signal wird somit nun der zweite Teilbereich 10 der Membran 9 zu einer entsprechenden Schwingung angeregt und gibt das akustische Signal in die Primärrichtung 2 weiter.

Der zweite akustische Pfad 7 verläuft somit von dem elektroakustischen Wandler 3 ausgehend entlang dem zweiten Umlenkbereich 4b des Umlenkelements 4 zu dem zweiten Bereich 10 der Membran 9.

Ein Abstand zwischen dem Umlenkelement 4 und dem elektroakustischen Wandler 3 sowie der Membran 9 ist in dieser ersten Ausführungsform derart gewählt, dass das in die rückwärtige Richtung 5 gesendete Signal, welches dem zweiten akustischen Pfad 7 folgt, eine derartige Laufzeitverzögerung gegenüber einem von dem elektroakustischen Wandler 3 direkt in die Primärrichtung 2 abgegebenen akustischen Signal erfährt, dass eine negative Überlagerung, also eine Auslöschung, mit dem direkt in die Primärrichtung 2 ausgesendeten akustischen Signal erfolgt. Der zweite akustische Pfad 7 weist somit eine Länge auf, die einem ganzen Vielfachen der Wellenlänge des akustischen Signals entspricht.

Das akustische Signal wird somit von dem ersten Teilbereich 8 der Membran 9 abgestrahlt und zugleich von dem zweiten Teilbereich 10 der Membran 9, der links von dem ersten Teilbereich 8 der Membran 9 liegt als auch, mit einer Phasenverschiebung, von dem zweiten Teilbereich 10 der Membran 9, der rechts von dem ersten Teilbereich 8 der Membran 9 liegt, abgestrahlt. Die Wellen des akustischen Signals überlagern sich dabei entlang der Primärrichtung 2.

Der zweite akustische Pfad 7 weist eine unterschiedliche Länge und somit eine unterschiedliche Laufzeit für das akustische Signal auf. Das akustische Signal trifft somit mit der Phasenverschiebung gegenüber der Schwingung des ersten Teilbereichs 8 der Membran 9 auf den zweiten Teilbereich 10 der Membran 9. Der Abstand zwischen der Membran 9 und dem Umlenkelement 4 sowie die Tiefe der Senke des zweiten Teilbereichs 4b des Umlenkelements 4 ist derart gewählt, dass das akustische Signal, welches dem zweiten akustischen Pfad 7 gefolgt ist, den zweiten Teilbereich 10, der rechts von dem ersten Teilbereich 8 der Membran 9 liegt, derart zum Schwingen anregt, dass eine Auslöschung eines Teils des akustischen Signals parallel in Richtung der Primärrichtung 2 und eine Verstärkung in einer demgegenüber geneigten Richtung erfolgt.

Bei einer Auslegung der Vorrichtung 1 und des zugehörigen ersten akustischen Pfades 6 sowie des zweiten akustischen Pfades 7 sind eine Ausbreitungsgeschwindigkeit des akustischen Signals innerhalb der Vorrichtung 1 zu berücksichtigen, welche beispielsweise durch ein Ausbreitungsmedium, durch welches sich das akustische Signal ausbreitet, beeinflusst wird. So könnte sich beispielsweise ein Dämm-Material zur Bedämpfung des Ausschwingens des elektroakustischen Wandlers 3 in dem Gehäuse 17 befinden, welches eine Ausbreitung des akustischen Signals beeinflusst.

Somit ergibt sich, dass das in Primärrichtung 2 abgegebene akustische Signal aufseiten des ersten akustischen Pfades 6 verstärkt wird und aufseiten des zweiten akustischen Pfads 7 abgeschwächt wird. Somit ergibt sich eine veränderte Richtcharakteristik der Vorrichtung 1, die nun vom Zentrum der Vorrichtung 1 aus gesehen in Richtung des ersten akustischen Pfades gerichtet ist. Es ist somit ersichtlich, dass durch eine entsprechende Gestaltung des Umlenkelementes 4 die Richtcharakteristik der Vorrichtung 1 gestaltet werden kann.

Es wird also der von dem elektroakustischen Wandler 3 erzeugte Schall durch ein Reflexionsmittel, hier das Umlenkelement 4, abgelenkt und auf Teilbereiche der Membran 9 gelenkt. Verdickungen in der Membran 9 verhindern einen akustischen Kurzschluss zwischen diesen Teilbereichen. Mittels einer Trägervorrichtung, die mit der Membran 9 verklebt ist, wird dieser Übergang zusätzlich abgedichtet. Durch die akustischen Laufzeiten des ersten akustischen Pfades 6 und des zweiten akustischen Pfades 7, die abhängig von den in diesen vorliegenden Materialien, wie z.B. einem Dämm-Material, sind, kann ein Verhältnis der von den unterschiedlichen Teilbereichen 8, 10 der Membran 9 abgestrahlten Schallwellen zueinander gestaltet werden und somit die Richtcharakteristik der Vorrichtung 1 beeinflusst werden. Bei einer entsprechenden Auslegung bewegt sich kein Schall mehr in Richtung des Gehäuses 17, wodurch dieses besonders dünn ausgelegt werden kann.

Ein Empfangen akustischer Signale aus der Primärrichtung 2 entspricht dem Aussenden akustischer Signale, wobei das akustische Signal aus der Primärrichtung 2 kommt und die Vorrichtung somit in umgekehrter Richtung durchläuft. Dabei wird der elektroakustische Wandler 3 nicht durch das Anlegen einer Spannung zum Schwingen angeregt, sondern wird durch das akustische Signal zu einer Schwingung angeregt, welche von dem elektroakustischen Wandler 3 in ein elektrisches Signal umgesetzt und an eine entsprechende Empfangselektronik weitergeleitet wird.

Der elektroakustische Wandler 3 wird somit bei dem Empfangen akustischer Signale durch das akustische Signal aus der Primärrichtung 2 und aus der rückwärtigen Richtung 5 angeregt. Dabei bildet der erste Umlenkbereich 4a des Umlenkelements 4 den ersten akustischen Pfad 6. Bei dem Empfangen akustischer Signale wird das aus der Primärrichtung 2 ankommende akustische Signal, welches den elektroakustischen Wandler 3 seitlich passiert, derart umgelenkt, dass dieses aus der rückwärtigen Richtung 5 auf den elektroakustischen Wandler 3 trifft. Das aus der Primärrichtung 2 empfangene akustische Signal, welches dem ersten akustischen Pfad 6 folgt, erfährt dabei eine derartige Laufzeitverzögerung gegenüber einem von dem elektroakustischen Wandler direkt aus der Primärrichtung 2 empfangenen akustischen Signal, dass eine konstruktive Überlagerung mit dem direkt aus der Primärrichtung 2 empfangenen akustischen Signal erfolgt. Ferner bildet der zweite Umlenkbereich 4b des Umlenkelements 4 den zweiten akustischen Pfad 7. Beim Empfangen des akustischen Signals aus der Primärrichtung 2 wird das ankommende akustische Signal, welches den elektroakustischen Wandler 3 seitlich passiert, über den zweiten akustischen Pfad 7 derart umgelenkt, dass dieses aus der rückwärtigen Richtung 5 auf den elektroakustischen Wandler 3 trifft. Es ergibt sich, dass die Vorrichtung 1 eine höhere Empfindlichkeit gegenüber akustischen Signalen aufweist, die aus einer Richtung eintreffen, die vom Zentrum der Vorrichtung 1 in Richtung des ersten Umlenkbereichs 4a und somit aufseiten des ersten akustischen Pfads 6 gelegen sind. Es ergibt sich ferner, dass die Vorrichtung 1 eine geringere Empfindlichkeit gegenüber akustischen Signalen aufweist, die aus einer Richtung eintreffen, die vom Zentrum der Vorrichtung 1 aus gesehen in Richtung des zweiten Umlenkbereichs 4b und somit aufseiten des zweiten akustischen Pfads 7 gelegen sind.

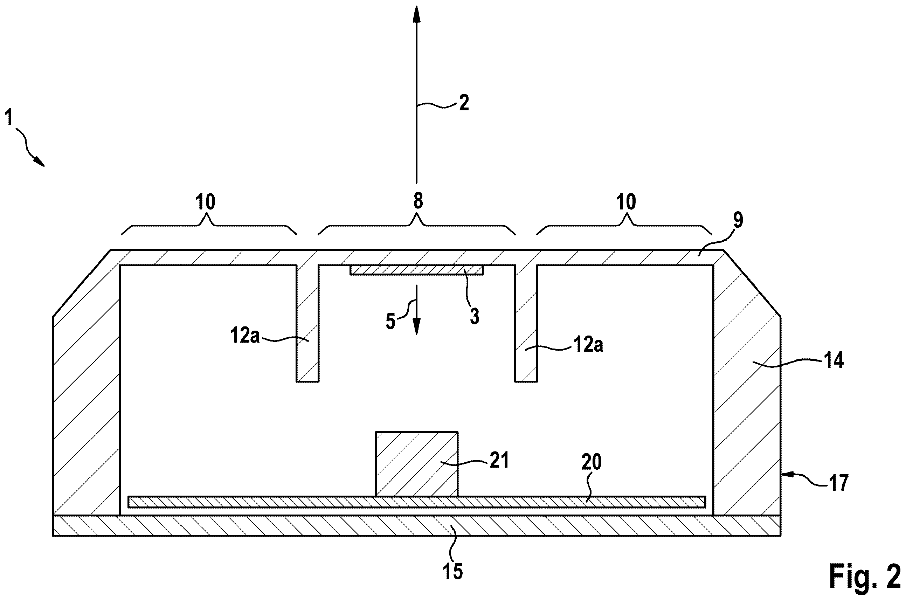

Figur 2 zeigt eine Vorrichtung 1 zum Aussenden akustischer Signale in eine Primärrichtung und Empfangen akustischer Signale aus der Primärrichtung in einer zweiten Ausführungsform. Die zweite Ausführungsform entspricht der ersten Ausführungsform, wobei das Umlenkelement 4 durch eine schallharte Leiterplatte 20 und auf der Leiterplatte 20 angeordnetes schallhartes Bauelement 21 gebildet wird. Das Bauelement 21 ist in dieser zweiten Ausführungsform beispielsweise ein Übertrager. Durch dieses Bauelement 21 erfolgt eine Aufspaltung des Schalls des nach unten gerichteten akustischen Signals in seitliche Schallströmungen. Ein schallhart ausgelegter seitlicher Membranträger 14 verhindert eine Schallleitung in seitliche Bauelemente. Die Membran 9 kann aus unterschiedlichen Materialien bestehen und/oder durch unterschiedliche Bauteile gebildet werden. In diesem zweiten Beispiel ist die Trägervorrichtung 12 dabei auf den schallharten Bereich 12a begrenzt, der in einem entsprechenden Fertigungsprozess wie Tiefziehen bzw. Gießen zusammen mit der Membran aus ein und dem gleichen Werkstoff gebildet wird.

Alternativ zu der in Figur 1 dargestellten Lösung ist in Figur 2 die Membran 9 zusammen mit dem Membranträger 14 beispielsweise durch Tiefziehen von Aluminium oder durch Kunststoff-Spritzgussfertigung aus ein und dem gleichen Material gefertigt und die Leiterplatte 20 schließt das Gehäuse 17 rückseitig ab.

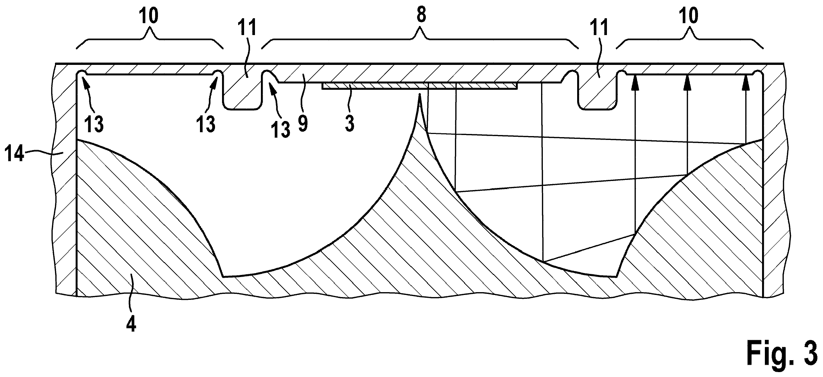

Figur 3 zeigt den Querschnitt durch eine alternative und nicht erfindungsgemäße Auslegung des in Figur 1 dargestellten Aufbaus. Die Membran 9 ist aus dem gleichen Material wie der Membranträger 14 gefertigt. In dem ersten Teilbereich 8 weist die Membran 9 eine erheblich höhere Dicke als in dem zweiten Teilbereich 10 auf. Das Umlenkelement 4 setzt sich jeweils aus bogenförmigen Abschnitten zusammen und ist symmetrisch aufgebaut, so dass bei Anregung mit der Arbeitsfrequenz dank konstruktiver Überlagerung der reflektierten Schallanteile mit den primär via dem Teilbereich 8 abgestrahlten Schallanteilen eine verstärkte Schallabstrahlung bzw. Schallempfindlichkeit senkrecht zur Membran 9 erreicht wird.

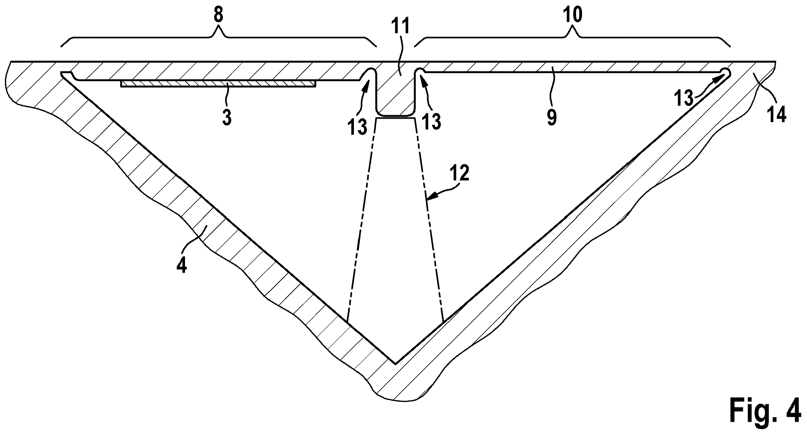

Figur 4 zeigt den Querschnitt durch eine erfindungsmäßige Ausprägung bei der der Schallweg des reflektierten Schalls ausschließlich durch die Umlenkvorrichtung 4 ohne Vorsehen eines Membranträgers 14 realisiert wird.

Dabei weist das Umlenkelement 4 eine im Querschnitt V-förmige Innenwandung auf. Dieser Aufbau gestattet eine Realisierung beispielsweise als kaum wahrnehmbaren Aufbau, indem beispielsweise die Membran 9 als Teil eines Verkleidungsteils eines Fahrzeugs, wie z.B. der Haut eines Stoßfängers oder/und eines Kotflügel ausgebildet ist.

Darüber hinaus erstreckt sich das Umlenkelement 4 bezüglich der den elektromechanischen Wandler 3 tragenden Position nur in eine Richtung. Dadurch wird sich eine asymmetrische Richtcharakteristik der Schallverteilung des ausgesandten bzw. der Empfindlichkeit des empfangenen Schall ergeben.

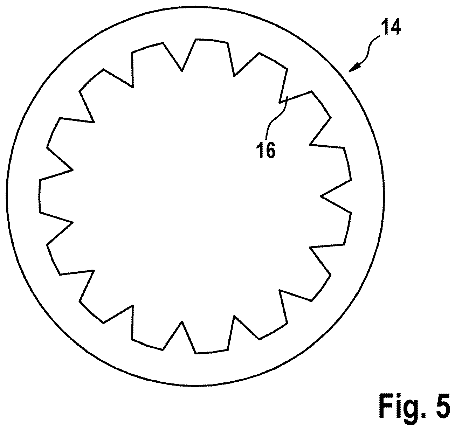

Figur 5 zeigt eine Draufsicht auf eine alternative Ausführung eines Membranträgers 14. Der gezeigte Membranträger 14 ist ein schallhartes Element. In den zuvor beschriebenen Ausführungsbeispielen wurde diese Eigenschaft dadurch erreicht, dass der Membranträger als massives Bauelement gestaltet wurde, was jedoch einen hohen Materialbedarf verursachte. Der in Figur 5 gezeigte Membranträger 14 weist hingegen eine Oberfläche auf, die von Streben 16 durchlaufen wird, die eine akustische Anregung des Membranträgers 14 zumindest bei der Arbeitsfrequenz verringern und diesen stabilisieren. Die Grundprinzipien, unter denen eine Reflexion stattfindet, sind dem Fachmann bekannt. Beispielsweise muss das Material eine hinreichende Steifigkeit aufweisen und es muss ein Impedanzsprung gegenüber dem Ausbreitungsmedium entstehen. Unter gewissen Winkelverhältnissen kann Schall nur reflektiert werden und nicht in das benachbarte Medium eindringen. Die Streben 16 verlaufen dabei entlang einer Hochachse der Vorrichtung 1, welche senkrecht auf der Membran 9 steht. Die Streben versteifen die Seitenwände des Gehäuses 17 und damit des Membranträgers 14 auf konstruktive Weise, ohne dass der Membranträger im Gesamtvolumen deutlich dicker ist, als die Membran 9. In alternativen Ausführungsformen der Erfindung weist der Membranträger eine glatte Oberfläche auf. Dabei weist der Membranträger 14 die fünffache Dicke der Membran 9 auf, um eine akustische Anregung der Membranträgers 14 zu verhindern.

In einer nicht in den Figuren dargestellten Ausführungsform sind auf einer Oberfläche des Umlenkelementes 4 Leiter geführt. Diese sind beispielsweise als eine Beschichtung aufgebracht. Bevorzugt ist das Umlenkelement 4 dabei gleichzeitig der Kontaktträger und dient zur Kontaktierung des elektroakustischen Wandlers 3.

Neben der obigen schriftlichen Offenbarung wird explizit auf die Offenbarung der Figuren 1 bis 5 hingewiesen.

## Patentansprüche

1. Vorrichtung (1) zum Aussenden akustischer Signale in eine Primärrichtung (2) und/oder Empfangen akustischer Signale aus der Primärrichtung (2), insbesondere zum Erfassen einer Fahrzeugumgebung, umfassend einen elektroakustischen Wandler (3) und ein Umlenkelement (4),
wobei der elektroakustische Wandler (3) dazu eingerichtet ist,
• bei dem Aussenden akustischer Signale das akustische Signal in die Primärrichtung (2) und eine rückwärtige Richtung (5) auszusenden und/oder
• bei dem Empfangen akustischer Signale durch das akustische Signal aus der Primärrichtung (2) und aus der rückwärtigen Richtung (5) angeregt zu werden;
wobei das Umlenkelement (4) dazu eingerichtet ist,
• bei dem Aussenden akustischer Signale das in die rückwärtige Richtung (5) ausgesendete akustische Signal über einen ersten akustischen Pfad (6) derart in die Primärrichtung (2) umzulenken, dass dieses den elektroakustischen Wandler (3) seitlich passiert, und/oder
• bei dem Empfangen akustischer Signale das aus der Primärrichtung (2) ankommende akustische Signal, welches den elektroakustischen Wandler (3) seitlich passiert, derart über den ersten akustischen Pfad (6) umzulenken, dass dieses aus der rückwärtigen Richtung (5) auf den elektroakustischen Wandler trifft (3),
wobei das Umlenkelement (4) ferner dazu eingerichtet ist,
• bei dem Aussenden akustischer Signale das in die rückwärtige Richtung (5) ausgesendete akustische Signal ferner über einen zweiten akustischen Pfad (7) derart in die Primärrichtung (2) umzulenken, dass dieses den elektroakustischen Wandler (3) seitlich passiert, und/oder
• bei dem Empfangen akustischer Signale das aus der Primärrichtung (2) ankommende akustische Signal, welches den elektroakustischen Wandler (3) seitlich passiert, derart über den zweiten akustischen Pfad (7) umzulenken, dass dieses aus der rückwärtigen Richtung (5) auf den elektroakustischen Wandler trifft (3),
wobei der erste akustische Pfad (6) und der zweite akustische Pfad (7) eine unterschiedliche Laufzeit für das akustische Signal aufweisen, um eine Richtcharakteristik der Vorrichtung (1) zu beeinflussen, **dadurch gekennzeichnet, dass** die Vorrichtung (1) eine Membran (9) aufweist, wobei der elektroakustische Wandler (3) mit einem ersten Teilbereich (8) der Membran (9) verbunden ist und der erste akustische Pfad (6) über einen zweiten Teilbereich (10) der Membran (9) führt.

2. Vorrichtung (1) gemäß Anspruch 1, **dadurch gekennzeichnet, dass** der erste akustische Pfad (6) durch das Umlenkelement (4) derart gebildet ist, dass
• das in die rückwärtige Richtung (5) gesendete akustische Signal, welches dem ersten akustischen Pfad (6) folgt, eine derartige Laufzeitverzögerung gegenüber einem von dem elektroakustischen Wandler direkt in die Primärrichtung (2) ausgesendeten akustischen Signal erfährt, dass eine konstruktive Überlagerung mit dem direkt in die Primärrichtung (2) ausgesendeten akustischen Signals erfolgt, und/oder
• das aus der Primärrichtung (2) empfangene akustische Signal, welches dem ersten akustischen Pfad (6) folgt, eine derartige Laufzeitverzögerung gegenüber einem von dem elektroakustischen Wandler (3) direkt aus der Primärrichtung (2) empfangenen akustischen Signal erfährt, dass eine konstruktive Überlagerung mit dem direkt aus der Primärrichtung (2) empfangenen akustischen Signal erfolgt.

3. Vorrichtung gemäß einem der Ansprüche 1 oder 2, **dadurch gekennzeichnet, dass** die Vorrichtung (1) ein Entkopplungsmittel (11) aufweist, wobei das Entkopplungsmittel (11) zwischen dem ersten Teilbereich (8) und dem zweiten Teilbereich (10) der Membran (9) angeordnet ist, wobei das Entkopplungsmittel (11) dazu eingerichtet ist eine Übertragung von Schwingungen zwischen dem ersten Teilbereich (8) und dem zweiten Teilbereich (10) der Membran (9) zumindest zu verringern.

4. Vorrichtung gemäß Anspruch 3, **dadurch gekennzeichnet, dass** das Entkopplungsmittel (11) eine Verdickung und/oder akustische Masse der Membran (9) zwischen dem ersten Teilbereich (8) und dem zweiten Teilbereich (10) ist.

5. Vorrichtung gemäß einem der Ansprüche 3 oder 4, **dadurch gekennzeichnet, dass** das Entkopplungsmittel (11) eine die Membran (9) stützende Trägervorrichtung (12) umfasst, wobei die stützende Trägervorrichtung (12) zumindest einen schallharten Bereich (12a) und einen schalldurchlässigen Bereich (12b) aufweist.

6. Vorrichtung (1) gemäß einem der Ansprüche 1 bis 5, **dadurch gekennzeichnet, dass** der erste Teilbereich (8) und/oder der zweite Teilbereich (10) der Membran (9) zumindest eine Sicke (13) in deren Randbereichen aufweisen.

7. Vorrichtung (1) gemäß einem der Ansprüche 1 bis 6, **dadurch gekennzeichnet, dass** die Vorrichtung (1) einen Membranträger (14) aufweist, wobei die Membran (9) von dem Membranträger (14) gehalten wird, wobei eine Dicke des Membranträger (14) zumindest ein 5-faches einer Dicke der Membran (9) beträgt.

8. Vorrichtung (1) gemäß einem der Ansprüche 1 bis 6, **dadurch gekennzeichnet, dass** die Vorrichtung (1) einen Membranträger (14) aufweist, wobei die Membran (9) von dem Membranträger (14) gehalten wird, wobei der Membranträger (14) eine Oberfläche aufweist, die von Streben oder Sicken durchlaufen wird.

## Claims

1. Apparatus (1) for transmitting acoustic signals in a primary direction (2) and/or receiving acoustic signals from the primary direction (2), in particular for detecting vehicle surroundings, comprising an electroacoustic transducer (3) and a deflection element (4),
wherein the electroacoustic transducer (3) is configured so as
• when acoustic signals are transmitted, to transmit the acoustic signal in the primary direction (2) and a backward direction (5), and/or
• when acoustic signals are received, to be stimulated by the acoustic signal from the primary direction (2) and from the backward direction (5);
wherein the deflection element (4) is configured so as
• when acoustic signals are transmitted, to deflect the acoustic signal transmitted in the backward direction (5) into the primary direction (2) via a first acoustic path (6) such that said signal passes the electroacoustic transducer (3) at the side, and/or
• when acoustic signals are received, to deflect the acoustic signal arriving from the primary direction (2), which signal passes the electroacoustic transducer (3) at the side, via the first acoustic path (6) such that said signal strikes the electroacoustic transducer (3) from the backward direction (5),
wherein the deflection element (4) is further configured so as:
• when acoustic signals are transmitted, to further deflect the acoustic signal transmitted in the backward direction (5) into the primary direction (2) via a second acoustic path (7) such that said signal passes the electroacoustic transducer (3) at the side, and/or
• when acoustic signals are received, to deflect the acoustic signal arriving from the primary direction (2), which signal passes the electroacoustic transducer (3) at the side, via the second acoustic path (7) such that said signal strikes the electroacoustic transducer (3) from the backward direction (5),
wherein the first acoustic path (6) and the second acoustic path (7) have a different delay for the acoustic signal in order to influence a directional characteristic of the apparatus (1), **characterized in that** the apparatus (1) has a diaphragm (9), wherein the electroacoustic transducer (3) is connected to a first subregion (8) of the diaphragm (9), and the first acoustic path (6) is routed via a second subregion (10) of the diaphragm (9).

2. Apparatus (1) according to Claim 1, **characterized in that** the first acoustic path (6) is formed by the deflection element (4) such that
• the acoustic signal sent in the backward direction (5), which signal follows the first acoustic path (6), experiences a propagation delay, in comparison with an acoustic signal transmitted by the electroacoustic transducer directly in the primary direction (2), that is such that a constructive superimposition with the acoustic signal transmitted directly in the primary direction (2) takes place, and/or
• the acoustic signal received from the primary direction (2), which signal follows the first acoustic path (6), experiences a propagation delay, in comparison with an acoustic signal received by the electroacoustic transducer (3) directly from the primary direction (2), that is such that a constructive superimposition with the acoustic signal received directly from the primary direction (2) takes place.

3. Apparatus according to either of Claims 1 and 2, **characterized in that** the apparatus (1) has a decoupling means (11), wherein the decoupling means (11) is arranged between the first subregion (8) and the second subregion (10) of the diaphragm (9), wherein the decoupling means (11) is configured to at least decrease a transmission of vibrations between the first subregion (8) and the second subregion (10) of the diaphragm (9).

4. Apparatus according to Claim 3, **characterized in that** the decoupling means (11) is a thickening and/or acoustic mass of the diaphragm (9) between the first subregion (8) and the second subregion (10) .

5. Apparatus according to either of Claims 3 and 4, **characterized in that** the decoupling means (11) comprises a carrier apparatus (12) supporting the diaphragm (9), wherein the supporting carrier apparatus (12) has at least one acoustically hard region (12a) and an acoustically transparent region (12b).

6. Apparatus (1) according to one of Claims 1 to 5, **characterized in that** the first subregion (8) and/or the second subregion (10) of the diaphragm (9) have at least one bead (13) in the marginal regions thereof.

7. Apparatus (1) according to one of Claims 1 to 6, **characterized in that** the apparatus (1) has a diaphragm carrier (14), wherein the diaphragm (9) is held by the diaphragm carrier (14), wherein a thickness of the diaphragm carrier (14) is at least 5 times a thickness of the diaphragm (9).

8. Apparatus (1) according to one of Claims 1 to 6, **characterized in that** the apparatus (1) has a diaphragm carrier (14), wherein the diaphragm (9) is held by the diaphragm carrier (14), wherein the diaphragm carrier (14) has a surface through which struts or beads run.

## Revendications

1. Dispositif (1) permettant d'émettre des signaux acoustiques dans une direction principale (2) et/ou de recevoir des signaux acoustiques provenant de la direction principale (2), en particulier pour détecter un environnement de véhicule, comprenant un transducteur électroacoustique (3) et un élément de déviation (4), dans lequel le transducteur électroacoustique (3) est conçu pour
• lors de l'émission de signaux acoustiques, émettre le signal acoustique dans la direction principale (2) et dans une direction rétrograde (5), et/ou
• lors de la réception de signaux acoustiques, être excité par le signal acoustique provenant de la direction principale (2) et de la direction rétrograde (5),
dans lequel l'élément de déviation (4) est conçu pour
• lors de l'émission de signaux acoustiques, dévier le signal acoustique émis dans la direction rétrograde (5) via un premier chemin acoustique (6) dans la direction principale (2), de telle manière que celui-ci franchisse latéralement le transducteur électroacoustique (3), et/ou
• lors de la réception de signaux acoustiques, dévier le signal acoustique provenant de la direction principale (2), qui franchit latéralement le transducteur électroacoustique (3), via le premier chemin acoustique (6), de telle manière que celui-ci atteigne le transducteur électroacoustique (3) en provenance de la direction rétrograde (5),
dans lequel l'élément de déviation (4) est en outre conçu pour
• lors de l'émission de signaux acoustiques, dévier en outre le signal acoustique émis dans la direction rétrograde (5) via un deuxième chemin acoustique (7) dans la direction principale (2), de telle manière que celui-ci franchisse latéralement le transducteur électroacoustique (3), et/ou
• lors de la réception de signaux acoustiques, dévier le signal acoustique provenant de la direction principale (2), qui franchit latéralement le transducteur électroacoustique (3), via le deuxième chemin acoustique (7), de telle manière que celui-ci atteigne le transducteur électroacoustique (3) en provenance de la direction rétrograde (5),
dans lequel le premier chemin acoustique (6) et le deuxième chemin acoustique (7) présentent un temps de parcours différent pour le signal acoustique, afin d'influencer une caractéristique d'orientation du dispositif (1),
**caractérisé en ce que** le dispositif (1) présente une membrane (9), dans lequel le transducteur électroacoustique (3) est relié à une première région partielle (8) de la membrane (9) et le premier chemin acoustique (6) conduit via une deuxième région partielle (10) de la membrane (9).

2. Dispositif (1) selon la revendication 1, **caractérisé en ce que** le premier chemin acoustique (6) est formé par l'élément de déviation (4), de telle manière que
• le signal acoustique émis dans la direction rétrograde (5), qui suit le premier chemin acoustique (6), subisse un retard de temps de parcours par rapport à un signal acoustique émis directement dans la direction principale (2) par le transducteur électroacoustique (3), tel qu'il se produit une superposition constructive avec le signal acoustique émis directement dans la direction principale (2), et/ou
• le signal acoustique reçu en provenance de la direction principale (2), qui suit le premier chemin acoustique (6), subisse un retard de temps de parcours par rapport à un signal acoustique reçu directement en provenance de la direction primaire (2) par le transducteur électroacoustique (3), tel qu'il se produit une superposition constructive avec le signal acoustique reçu directement en provenance de la direction principale (2).

3. Dispositif selon une des revendications 1 ou 2, **caractérisé en ce que** le dispositif (1) présente un moyen de découplage (11), dans lequel le moyen de découplage (11) est disposé entre la première région partielle (8) et la deuxième région partielle (10) de la membrane (9), dans lequel le moyen de découplage (11) est conçu au moins pour réduire une transmission de vibrations entre la première région partielle (8) et la deuxième région partielle (10) de la membrane (9).

4. Dispositif selon la revendication 3, **caractérisé en ce que** le moyen de découplage (11) est une surépaisseur et/ou une masse acoustique de la membrane (9) entre la première région partielle (8) et la deuxième région partielle (10).

5. Dispositif selon une des revendications 3 ou 4, **caractérisé en ce que** le moyen de découplage (11) comprend un dispositif de support (12) soutenant la membrane (9), dans lequel le dispositif de support en soutien (12) présente au moins une zone imperméable au son (12a) et une zone perméable au son (12b).

6. Dispositif (1) selon l'une quelconque des revendications 1 à 5, **caractérisé en ce que** la première région partielle (8) et/ou la deuxième région partielle (10) de la membrane (9) présente(nt) au moins une moulure (13) dans sa/leurs région(s) de bord.

7. Dispositif (1) selon l'une quelconque des revendications 1 à 6, **caractérisé en ce que** le dispositif (1) présente un support de membrane (14), dans lequel la membrane (9) est maintenue par le support de membrane (14), dans lequel une épaisseur du support de membrane (14) vaut au moins cinq fois une épaisseur de la membrane (9) .

8. Dispositif (1) selon l'une quelconque des revendications 1 à 6, **caractérisé en ce que** le dispositif (1) présente un support de membrane (14), dans lequel la membrane (9) est maintenue par le support de membrane (14), dans lequel le support de membrane (14) présente une surface, qui est parcourue par des entretoises ou des moulures.
